# EUROPEAN PATENT SPECIFICATION

(11) **EP 0 280 380 B1**
(45) Date of publication and mention of the grant of the patent: **12.05.1993**
(21) Application number: 88200349.4
(22) Date of filing: 25.02.1988
(51) Int. Cl.: C08G 67/02, C07F 9/50

(54) **Catalyst compositions and process for copolymerizing Co with one or more olefinically unsaturated compounds**
Katalysatorzusammensetzungen und Verfahren zur Copolymerisation von CO mit einer oder mehreren ungesättigten olefinischen Verbindungen
Compositions de catalyseur et procédé pour copolymeriser CO avec un ou plusieurs composés à insaturation oléfinique

(30) Priority: 26.02.1987 NL 8700476
(43) Date of publication of application: 31.08.1988
(73) Proprietor: SHELL INTERNATIONALE RESEARCH MAATSCHAPPIJ B.V., 2596 HR Den Haag (NL)
(72) Inventor: Van Doorn, Johannes Adrianus, NL-1031 CM Amsterdam (NL); Drent, Eit, NL-1031 CM Amsterdam (NL); Van Leeuwen, Petrus Wilhelmus Nicolaas Maria, NL-1031 CM Amsterdam (NL); Meijboom, Nicolaas, NL-1031 CM Amsterdam (NL); Van Oort, Aart Bartus, NL-1031 CM Amsterdam (NL); Wife, Richard Lewin, NL-1031 CM Amsterdam (NL)

(56) References cited:
- EP-A- 0 121 965
- EP-A- 0 186 228
- EP-A- 0 219 906
- EP-A- 0 248 483
- GB-A- 2 058 126

## Description

The invention relates to a process for the preparation of polymers of carbon monoxide with one or more olefinically unsaturated compounds.

High molecular weight polymers of carbon monoxide with one or more olefinically unsaturated compounds (for the sake of brevity referred to as A), in which the monomer units are present in alternating order and which polymers therefore consist of units of the general formula -CO (A')-, wherein A' represents a monomer unit derived from a monomer A used, can be prepared by using catalyst compositions based upon the three components following:
a) a palladium compound, such as palladium acetate,
b) an acid with a pka of less than 4, such as trifluoroacetic acid, and
c) a tri(hydrocarbyl)phosphine, such as triphenylphosphine.
Such a process is known from Applicant's patent application EP-A-121965, Example I, comparative test 1a. Under the conditions employed, however, the yield of polymer was negligible. Later the Applicant has improved the reaction conditions, such that small amounts of polymer could be recovered from the reaction mixture, (cf. comparative Example I in the Applicant's EP-A-277695, which is a non-prepublished application, earlier filed than the present application). The yield of polymer attainable remained, however, unsatisfactorily low.

An investigation carried out by the Applicant into these catalyst compositions has shown that the activities of the latter can be considerably enhanced when component c) is omitted from the compositions and when a sulphonic acid of the general formula R₁R₂P-R-SO₃H, wherein R₁ and R₂ represent similar or different hydrocarbon groups which may or may not be substituted with polar groups and R is a bivalent bridging group holding 1-4 carbon atoms in the bridge, is used as the component b). For the sake of brevity, the latter acids will hereinafter be referred to as phosphino-sulphonic acids.

The present patent application therefore relates to a process for the preparation of polymers, wherein a mixture of carbon monoxide and one or more olefinically unsaturated compounds is polymerized by using a catalyst composition comprising
a) a palladium compound, characterized in that it also comprises
b) a sulphonic acid of the formula R₁R₂P-R-SO₃H, wherein R₁ and R₂ represent similar or different hydrocarbon groups which may or may not be substituted with polar groups and R is a bivalent bridging groups having 1-4 carbon atoms in the bridge.

The patent application further relates to (C₁-C₃)alkyl sulphonic acids, in which one of the carbon atoms bears an R₁R₂P- group wherein R₁ and R₂ represent similar or different hydrocarbon groups which may or may not be substituted with polar groups for use in catalyst compositions for the preparation of polymers of carbon monoxide with one or more olefinically unsaturated compounds which catalyst compositions comprise a palladium compound and said sulphonic acid.

The palladium compound used as component a) is preferably a palladium salt of a carboxylic acid, and palladium acetate in particular.

Both aromatic and aliphatic sulphonic acids are eligible as phosphino-sulphonic acids that should be present in the catalyst compositions as the component b). Preference is given to the use of an aromatic sulphonic acid as the component b). The groups R₁ and R₂ may be aliphatic or aromatic. It is preferred to use sulphonic acids in which the groups R₁ and R₂ are similar, as the component b), and further, to use sulphonic acids in which the groups R₁ and R₂ are aromatic groups, as the component b). If the groups R₁ and R₂ contain polar substituents, these may be, for instance, one or more of the following groups: alkoxy, halogen, sulphonic acid, sulphonate, carboxylic acid, carboxylic acid salt, carboxylic acid ester and amide.

Examples that may be mentioned of aromatic sulphonic acids eligible for use as components b) in the catalyst compositions of the invention, are aryl sulphonic acids containing an R₁R₂P-group in the ortho position in respect to the sulphonic acid group. These compounds can be prepared by reacting an alkali metal salt of an aryl sulphonic acid having a lithium atom in the ortho position in respect to the sulphonate group, with an R₁R₂ halophosphine and then converting the sulphonic acid salt thus obtained into the corresponding acid. This method of preparing phosphino-sulphonic acids is novel. The ortho-lithium-substituted aryl sulphonate may be prepared for instance by ortho-lithiating the corresponding aryl sulphonate with an alkyl lithium compound. Thus was prepared, for instance, ortho(diphenyl-phosphino)benzene sulphonic acid, by ortho-lithiation of lithium benzene sulphonic acid with butyl lithium, followed by the reaction of the ortho-lithium-substituted lithium benzene sulphonate thus obtained with diphenyl chloro phosphine and acidification of the sulphonic acid salt thus obtained.

Examples that may be mentioned of aliphatic sulphonic acids eligible for use as the components b) in the catalyst compositions of the invention are (C₁-C₃) alkyl sulphonic acids in which one of the carbon atoms bears an R₁R₂P-group. These compounds are novel. They can be prepared, inter alia, by reacting a compound of the general formula R₁R₂P-X₁, wherein X₁ represents an alkali metal atom, with a compound of the general formula Y-R₃-SO₃X₂, wherein R₃ represents a bivalent saturated hydrocarbon group with 1-3 carbon atoms, Y represents a halogen atom and X₂ an alkali metal atom, and then converting the sulphonic acid salt thus obtained into the corresponding acid. Thus were prepared for instance 2-(diphenyl-phosphino)ethane sulphonic acid and 3-(diphenyl-phosphino)propane sulphonic acid, by reaction of (C₆H₅)₂PNa with Cl-CH₂-CH₂-SO₃Na and Cl-CH₂-CH₂-CH₂-SO₃Na, respectively, and acidification of the sulphonic acid salts thus obtained. The starting (C₆H₅)₂PNa can be obtained, inter alia, by reaction of triphenyl phosphine with sodium in liquid ammonia.

In the catalyst compositions of the invention, component b) is preferably present in a quantity of from 1 to 50, and in particular of from 1 to 25, equivalents per gram atom of palladium.

An investigation into the present catalyst compositions has further shown that their activities could be considerably enhanced by the additional inclusion of a non-noble transition metal salt of an acid with a pKa of less than 4. In the present patent application, non-noble transition metals should be taken to be all transition metals, including the actinides and lanthanides, but with the exclusion of the noble metals ruthenium, osmium, rhodium, iridium, palladium, platinum, silver and gold. Examples of transition metals whose salts can be used very suitably in the catalyst compositions of the invention are the Group 4B metals titanium, zirconium and hafnium, the Group 5B metals vanadium, niobium and tantalum, the Group 6B metal chromium, molybdenum and tungsten, the Group 7B metal manganese, the Group 8 metals iron, cobalt and nickel, the Group 1B metal copper, the Group 2B metal zinc, the lanthanides cerium, lanthanium, praseodymium, samarium, dysprosium, erbium and lutetium and the actinides actinium, thorium and uranium.

The catalyst compositions of the present process which contain, in addition, a non-noble transition metal salt of an acid with a pKa of less than 4 are novel catalyst compositions. Therefore the present invention also relates to catalyst compositions, comprising
a) a palladium compound, and
b) a sulphonic acid of the formula R₁R₂P-R-S0₃H, wherein R₁ and R₂ represents similar or different hydrocarbon groups which may or may not be substituted with polar groups and R is a bivalent bridging group having 1-4 carbon atoms in the bridge,
characterized in that, in addition they include a non-noble transition metal salt of an acid with a pKa of less than 4.

Special preference is given to the use of salts of the transition metals following: the Group 4B metal zirconium, the Group 5B metal vanadium, the Group 1B metal copper, and the actinide uranium.

Examples of suitable acids with a pKa of less than 4 (determined in aqueous solution at 18 °C), the non-noble transition metal salts of which can be incorporated in the the catalyst compositions of the invention as an additional component, are mineral acids, such as sulphuric acid, sulphonic acids, such as para-toluenesulphonic acid and carboxylic acids, such as trifluoroacetic acid. Preference is given to acids with a pKa of less than 2 and in particular to sulphuric acid and para-toluenesulphonic acid. If a non-noble transition metal salt is included in the catalyst composition of the invention as the additional component, its quantity is preferably of from 0.5 to 200 and in particular of from 1.0 to 100 equivalents per gram atom of palladium.

The activity of the catalyst compositions of the invention can be enhanced not only by the incorporation of a non-noble transition metal salt of an acid with a pKa of less than 4, but also by the incorporation of a quinone. If desired, both a non-noble transition metal salt and a quinone may be taken up in the catalyst composition. Besides the substituted or unsubstituted benzoquinones, other quinones, such as substituted or unsubstituted naphthoquinones and anthraquinones, are also suitable. Benzoquinones are preferred and 1,4-benzoquinones in particular. The quantity of quinone used preferably 1-10 000 and in particular 10-5000 mol per gram atom of palladium.

The catalyst compositions of the present process which contain, in addition, a quinone are novel catalyst compositions. Therefore the invention also relates to catalyst compositions, comprising
a) a palladium compound, and
b) a sulphonic acid of the formula R₁R₂P-R-SO₃H, wherein R₁ and R₂ represent similar or different hydrocarbon groups which may or may not be substituted with polar groups and R is a bivalent bridging group having 1-4 carbon atoms in the bridge,
characterized in that, in addition, they include a quinone, such as 1,4-benzoquinone, in a quantity of from 10 to 5000 mol per gram atom of palladium.

The polymerization by using the catalyst composition of the invention is preferably carried out in a liquid diluent. Very suitable liquid diluents are lower alcohols, such as methanol and ethanol. Optionally, the polymerization may be carried out in the gaseous phase.

Eligible olefinically unsaturated organic compounds that can be polymerized with carbon monoxide with the aid of the catalyst compositions of the invention are both compounds which consist exclusively of carbon and hydrogen and compounds which, in addition to carbon and hydrogen, include one or more hetero-atoms. The catalyst compositions of the invention are preferably used to prepare polymers of carbon monoxide with one or more olefinically unsaturated hydrocarbons. Examples of suitable hydrocarbon monomers are ethene and other α-olefins such as propene, butene-1, hexene-1 and octene-1, as well as styrene and alkyl substituted styrenes, such as p-ethyl styrene. The catalyst compositions of the invention are particularly suitable for use in the preparation of copolymers of carbon monoxide with ethene and in the preparation of terpolymers of carbon monoxide with ethene and a further olefinically unsaturated hydrocarbon, propene in particular.

The quantity of catalyst composition used in the preparation of the polymers may vary within wide ranges. Per mol of olefinically unsaturated compound to be polymerized, such a quantity of catalyst is preferably used as to contain 10⁻⁷-10⁻³ and in particular 10⁻⁶-10⁻⁴ gram atom of palladium.

The preparation of the polymers is preferably carried out at a temperature of 20-200 °C and a pressure of 1-200 bar and in particular at a temperature of 30-150 °C and a pressure of 20-100 bar. In the mixture to be polymerized, the molar ratio of the olefinically unsaturated compounds relative to carbon monoxide is preferably 10:1-1:5 and in particular 5:1-1:2. The carbon monoxide used in the polymer preparation of the invention need not be pure. It may contain such contaminants as hydrogen, carbon dioxide and nitrogen.

The invention will now be illustrated with the aid of the examples following.

### Example 1

ortho-(diphenyl-phosphino)benzene sulphonic acid was prepared as follows. To a mixture of 16.4 g of lithiumbenzene sulphonate and 250 ml of dry tetrahydrofuran present in a mechanically stirred reaction vessel which was kept at -78 °C by cooling, was added 62.5 ml of a 1,6 molar solution of butyl lithium in n-hexane. After 2 hours, 18.25 ml of diphenyl-chloro phosphine was added to the reaction mixture. After the cooling was cut off, the reaction mixture was stirred for another 12 hours. To the reaction mixture were added 100 ml of water and 150 ml of diethyl ether. The layer of water formed was separated off and evaporated to dryness. The residue was dissolved in 300 ml of water and acidified with 6N hydrochloric acid. The ortho-(diphenyl-phosphino)benzene sulphonic acid obtained was filtered off, washed with water and dried.

### Example 2

2-(diphenyl-phosphino)ethane sulphonic acid was prepared as follows. To a solution of 13.8 g of sodium in 1 l of liquid ammonia present in a stirred reaction vessel which was kept at -78 °C by cooling, 78.6 g of triphenyl phosphine was added over 30 minutes. After 1 hour, 55.3 g of sodium, 2-chloro-ethane sulphonate monohydrate was added to the reaction mixture. After the cooling was cut off, the reaction mixture was stirred for another 12 hours. To the reaction mixture was added 16.1 g of ammonium chloride. After evaporation of ammonia and addition of 500 ml of tetrahydrofuran, the reaction mixture was kept at 40 °C for 30 minutes. The reaction mixture was filtered over diatomaceous earth and the filtrate was evaporated. Ether was added to the oil thus obtained, and the solid then formed was dried in vacuo. Thus, a product was obtained which comprised a mixture of the sodium salt of 2-(diphenyl-phosphino)ethane sulphonic acid and NaCl. The sodium salt was treated with trifluro acetic acid to prepare the 2-(diphenyl-phosphino)ethane sulphonic acid.

### Example 3

3-(diphenyl-phosphino)propane sulphonic acid was prepared as follows. To a solution of 3.8 g of sodium in 500 ml of liquid ammonia in a stirred reaction vessel which was kept at -78 °C by cooling, was added 21.8 g of triphenyl phosphine. After 30 minutes, 4.3 g of ammonium chloride was added and after another 30 minutes, 15 g of sodium,3-chloro propane sulphonate was added. After the cooling was cut off, 400 ml of tetrahydrofuran was added to the reaction mixture. After evaporation of ammonia, the mixture was refluxed for some time and then evaporated. The residue thus obtained was washed with hot ethanol and the product was dried in vacuo. Thus, a product was obtained which comprised a mixture of the sodium salt of 2-(diphenyl-phosphino)propane sulphonic acid and NaCl. The sodium salt was treated with trifluoro acetic acid to prepare the 2-(diphenyl-phosphino)propane sulphonic acid.

### Example 4

A carbon monoxide/ethene copolymer was prepared as follows. A magnetically stirred autoclave of 250 ml capacity was charged with a catalyst solution comprising
50 ml of methanol,
0.1 mmol of palladium acetate,
2.0 mmol of para-toluenesulphonic acid, and
0.3 mmol of triphenyl phosphine.

After air present in the autoclave was dispelled by evacuation, ethene was introduced until a pressure of 30 bar was reached, followed by carbon monoxide until a pressure of 60 bar was reached. Next, the contents of the autoclave were brought 110 °C. After 5 hours, the polymerization was terminated by cooling to room temperature and then releasing the pressure. The polymer formed was filtered off, washed with methanol and dried in vacuo at room temperature.

The polymerization rate was 5 g copolymer/g palladium/hour.

### Example 5

A carbon monoxide/ethene copolymer was prepared substantially in the same way as the copolymer of Example 4, the differences being that
a) the catalyst solution comprised 0.15 mmol of ortho-(diphenyl-phosphino)benzene sulphonic acid instead of the combination of para-toluenesulphonic acid and triphenyl phosphine,
b) after evacuation of the autoclave, ethene was introduced until a pressure of 20 bar was reached, followed by carbon monoxide, until a pressure of 40 bar was reached, and
c) the reaction temperature was 80 °C instead of 110 °C.

The polymerization rate was 90 g copolymer/g palladium/hour.

### Example 6

A carbon monoxide/ethene copolymer was prepared substantially in same way as the copolymer of Example 5, except that, in addition, the catalyst solution included 0.5 mmol of copper para-tosylate.

The polymerization rate was 115 g copolymer/g palladium/hour.

### Example 7

A carbon monoxide/ethene copolymer was prepared substantially in the same way as the copolymer of Example 5, except that, in addition, the catalyst solution included 0.5 mmol of vanadyl sulphate.

The polymerization rate was 96 g copolymer/g palladium/hour.

### Example 8

A carbon monoxide/ethene copolymer was prepared substantially in the same way as the copolymer of Example 5, except that, in addition, the catalyst solution included 0.5 mmol of zirconium sulphate.

The polymerization rate was 110 g copolymer/g palladium/hour.

### Example 9

A carbon monoxide/ethene copolymer was prepared substantially in the same way as the copolymer of Example 5, except that, in addition, the catalyst solution included 0.5 mmol of uranyl sulphate.

The polymerization rate was 120 g copolymer/g palladium/hour.

### Example 10

A carbon monoxide/ethene/propene polymer was prepared substantially in the same way as the copolymer of Example 4, the differences being that
a) the catalyst solution comprised 0.15 mmol of ortho-(diphenyl-phosphino)benzene sulphonic acid instead of the combination of para-toluenesulphonic acid and triphenyl phosphine, and in addition, included 0.5 mmol of copper para-tosylate,
b) after evacuation of the autoclave, 30 ml of propane was introduced in addition,
c) ethene was introduced into the autoclave until a pressure of 25 bar was reached, followed by carbon monoxide, until a pressure of 55 bar was reached, and
d) the reaction temperature was 80 °C instead of 110 °C.

The polymerization rate was 175 g terpolymer/g palladium/hour.

### Example 11

A carbon monoxide/ethene copolymer was prepared substantially in the same way as the copolymer of Example 4, the differences being that
a) a catalyst solution was used which comprised 100 ml of methanol,
   0.1 mmol of palladium acetate, and
   0.1 mmol of ortho-(diphenyl-phosphino)benzene sulphonic acid,
b) the reaction temperature was 120 °C, instead of 110 °C, and
c) the reaction time was 1.5 hour instead of 5 hours.

The polymerization rate was 900 g copolymer/g palladium/hour.

### Example 12

A carbon monoxide/ethene copolymer was prepared substantially in the same way as the copolymer of Example 4, the differences being that
a) the autoclave had a capacity of 100 ml instead of 250 ml,
b) a catalyst solution was used which comprised
   20 ml of methanol,
   0.12 mmol of palladium acetate, and
   0.24 mmol of 3-(diphenyl-phosphino)propane sulphonic acid,
c) after evacuation of the autoclave, ethene was introduced until a pressure of 15 bar was reached, followed by carbon monoxide until a pressure of 30 bar was reached,
d) the reaction teperature was 120 °C instead of 110 °C, and
e) the reaction time was 40 minutes instead of 5 hours.

The polymerization rate was 80 g copolymer/g palladium/hour.

Of Examples 1-12, Examples 1-3 and 5-12 are examples according to the invention. In Example 1, ortho-(diphenyl-phosphino)benzene sulphonic acid was prepared by a novel process. Examples 2 and 3 disclose the preparation of the novel compounds 2-(diphenyl-phosphino)ethane sulphonic acid and 3-(diphenyl-phosphino)propane sulphonic acid.
Examples 5-12 concern the preparation of polymers of carbon monoxide with one or more olefinically unsaturated compounds by using the novel catalyst compositions of the invention comprising a palladium compound and a phosphino-sulphonic acid. Example 4, in which a catalyst composition containing no phosphino-sulphonic acid was used, is outside the scope of the invention. This example is included in the patent application for comparison.

The enhanced activity which is brought about by replacing in the catalyst composition the combination para-toluenesulphonic acid/triphenyl phosphine by a phosphino-sulphonic acid is clearly shown by the comparison of the polymerization rates achieved in Examples 5, 11 and 12 with those of Example 4.
In Example 4, which was carried out at 110 °C, the polymerization rate was 5 g/g/h. Example 5, carried out at a temperature which was 30 °C lower (80 °C), afforded a polymerization rate which was 18 times higher (90 g/g/h). The polymerization rates for Examples 11 and 12 were 180 (900 g/g/h) and 16 (80 g/g/h/) times higher, respectively, at a temperature which was 10 °C higher (120 °C). On the strength of a rule of thumb to the effect that reduction of the reaction temperature by 10 °C will result in the polymerization time being more or less halved, one may assume that had Example 11 and 12 been executed at the same temperature as Example 4, their respective polymerization rates would have been about 90 and 8 times higher than that of Example 4.

That the activity of the catalyst compositions of the invention is favourably influenced by the incorporation therein of a non-noble transition metal salt of an acid with a pKa of less than 4, is clearly demonstrated by the comparison of the polymerization rates achieved in Examples 6-9 with those obtained in Example 5.
With the aid of ¹³C-NMR analysis it was established that the carbon monoxide/ethene copolymers prepared in accordance with Examples 4-9 and 11 and 12 had a linear alternating structure and therefore consisted of units of the formula -CO-(C₂H₄)-. The copolymers had a melting point of 257 °C.

It was also established with the aid of ¹³C-NMR analysis that the carbon monoxide/ethene/propene terpolymer prepared by Example 10 had a linear structure and consisted of units of the formula -CO-(C₂H₄)-, and units of the formula -CO-(C₃H₆)-, which units occurred randomly distributed within the terpolymer. The terpolymer had a melting point of 220 °C.

## Claims

1. Process for the preparation of polymers, wherein a mixture of carbon monoxide and one or more olefinically unsaturated compounds is polymerized by using a catalyst composition comprising
a) a palladium compound, characterized in that it also comprises
b) a sulphonic acid of the formula R₁R₂P-R-SO₃H, wherein R₁ and R₂ represent similar or different hydrocarbon groups which may or may not be substituted with polar groups and R is a bivalent bridging group having 1-4 carbon atoms in the bridge.

2. Process as claimed in claim 1, characterized in that the catalyst composition comprises a palladium salt of carboxylic acid, as component a).

3. Process as claimed claims 1 or 2, characterized in that the groups R₁ and R₂ of the sulphonic acid are identical aromatic groups.

4. Process as claimed in claim 3, characterized in that the catalyst composition includes an arylsulphonic acid having and R₁R₂P-group in ortho-position in respect to the sulphonic acid group, as component b).

5. Process catalyst as claimed in claim 4, characterized in that the the catalyst composition includes ortho-(diphenyl-phosphino)benzene sulphonic acid as component b).

6. Process as claimed in claims 1 or 2, characterized in that the catalyst composition includes a (C₁-C₃) alkyl sulphonic acid in which one of the carbon atoms bears a R₁R₂P-group as the component b).

7. Process as claimed in claim 6, characterized in that the catalyst composition includes 2-(diphenyl-phosphino)ethane sulphonic acid or 3-(diphenyl-phosphino)propane sulphonic acid as the component b).

8. Process as claimed in any one of claims 1-7, characterized in that component b) is present in a quantity of 1-25 equivalents per gram atom of palladium.

9. Process as claimed in any one of claims 1-8, characterized in that, in addition the catalyst composition includes a non-noble transition metal salt of an acid with a pKa of less than 4.

10. Process as claimed in any one or more of claims 1-9, characterized in that, in addition, the catalyst composition includes a quinone, such as 1,4-benzoquinone, in a quantity of from 10 to 5000 mol per gram atom of palladium.

11. Catalyst compositions, comprising
a) a palladium compound, and
b) a sulphonic acid of the formula R₁R₂P-R-SO₃H, wherein R₁ and R₂ represent similar or different hydrocarbon groups which may or may not be substituted with polar groups and R is a bivalent bridging group having 1-4 carbon atoms in the bridge,
characterized in that, in addition they include a non-noble transition metal salt of an acid with a pKa of less than 4.

12. Catalyst compositions, comprising
a) a palladium compound, and
b) a sulphonic acid of the formula R₁R₂P-R-SO₃H, wherein R₁ and R₂ represent similar or different hydrocarbon groups which may or may not be substituted with polar groups and R is a bivalent bridging group having 1-4 carbon atoms in the bridge,
characterized in that, in addition they include a quinone, such as 1,4-benzoquinone, in a quantity of from 10 to 5000 mol per gram atom of palladium.

## Patentansprüche

1. Verfahren zur Herstellung von Polymeren, in welchem eine Mischung von Kohlenmonoxid und einer oder mehreren olefinisch ungesättigten Verbindung(en) unter Verwendung einer Katalysatorzusammensetzung polymerisiert wird, welche
a) eine Palladiumverbindung enthält, dadurch gekennzeichnet, daß sie außerdem
b) eine Sulfonsäure der Formel R₁R₂P-R-SO₃H enthält, in welcher R₁ und R₂ gleiche oder unterschiedliche Kohlenwasserstoffgruppen bedeuten, welche gegebenenfalls mit polaren Gruppen substituiert sind, und R eine zweiwertige Brückengruppe mit 1 bis 4 Kohlenstoffatomen in der Brücke bedeutet.

2. Verfahren wie in Anspruch 1 beansprucht, dadurch gekennzeichnet, daß die Katalysatorzusammensetzung als Komponente a) ein Palladiumsalz einer Karbonsäure enthält.

3. Verfahren wie in Anspruch 1 oder 2 beansprucht, dadurch gekennzeichnet, daß die Gruppen R₁ und R₂ der Sulfonsäure identische aromatische Gruppen sind.

4. Verfahren wie in Anspruch 3 beansprucht, dadurch gekennzeichnet, daß die Katalysatorzusammensetzung eine Arylsulfonsäure enthält, bei der sich die R₁R₂P-Gruppe in ortho-Stellung zur Sulfonsäuregruppe befindet.

5. Verfahrenskatalysator wie in Anspruch 4 beansprucht, dadurch gekennzeichnet, daß die Katalysatorzusammensetzung als Komponente b) ortho-(Diphenyl-phosphino)benzolsulfonsäure enthält.

6. Verfahren wie in den Ansprüchen 1 oder 2 beansprucht, dadurch gekennzeichnet, daß die Katalysatorzusammensetzung als Komponente b) eine (C₁-C₃)Alkylsulfonsäure enthält, in der eines der Kohlenstoffatome mit einer R₁R₂P-Gruppe verbunden ist.

7. Verfahren wie in Anspruch 6 beansprucht, dadurch gekennzeichnet, daß die Katalysatorzusammensetzung als Komponente b) 2-(Diphenyl-phosphino)ethansulfonsäure oder 3-(Diphenyl-phosphino)propansulfonsäure enthält.

8. Verfahren wie in irgendeinem der Ansprüche 1 bis 7 beansprucht, dadurch gekennzeichnet, daß die Komponente b) in einer Menge entsprechend 1 bis 25 Äquivalenten je Grammatom Palladium vorliegt.

9. Verfahren wie in irgendeinem der Ansprüche 1 bis 8 beansprucht, dadurch gekennzeichnet, daß die Katalysatorzusammensetzung zusätzlich ein Salz eines nicht-edlen Übergangsmetalls mit einer Säure mit einem pKa-Wert von weniger als 4 enthält.

10. Verfahren wie in irgendeinem der Ansprüche 1 bis 9 beansprucht, dadurch gekennzeichnet, daß die Katalysatorzusammensetzung zusätzlich ein Chinon, beispielsweise 1,4-Benzochinon, in einer Menge entsprechend 10 bis 5000 Mol je Grammatom Palladium enthält.

11. Katalysatorzusammensetzungen, umfassend
a) eine Palladiumverbindung und
b) eine Sulfonsäure der Formel R₁R₂P-R-SO₃H, in welcher R₁ und R₂ gleiche oder unterschiedliche Kohlenwasserstoffgruppen bedeuten, die gegebenenfalls mit polaren Gruppen substituiert sind, und R eine zweiwertige Brückengruppe mit 1 bis 4 Kohlenstoffatomen in der Brücke darstellt,
dadurch gekennzeichnet, daß sie zusätzlich ein Salz eines nicht-edlen Übergangsmetalles mit einer Säure mit einem pKa-Wert von weniger als 4 enthalten.

12. Katalysatorzusammensetzungen, umfassend
a) eine Palladiumverbindung und
b) eine Sulfonsäure der Formel R₁R₂P-R-SO₃H, in welcher R₁ und R₂ gleiche oder unterschiedliche Kohlenwasserstoffgruppen bedeuten, welche gegebenenfalls mit polaren Gruppen substituiert sind, und R eine zweiwertige Brückengruppe mit 1 bis 4 Kohlenstoffatomen in der Brücke darstellt,
dadurch gekennzeichnet, daß sie zusätzlich ein Chinon, wie 1,4-Benzochinon, in einer Menge entsprechend 10 bis 5000 Mol je Grammatom Palladium enthalten.

## Revendications

1. Procédé pour la préparation de polymères, dans lequel on polymérise un mélange de monoxyde de carbone et d'un ou de plusieurs composés à insaturation oléfinique par utilisation d'une composition de catalyseur comprenant
a) un composé du palladium, caractérisé en ce qu'elle comprend également
b) un acide sulfonique de formule R₁ R₂ P-R-SO₃ H, dans laquelle R₁ et R₂ représentent des groupes hydrocarbonés semblables ou différents qui peuvent ou non être substitués avec des groupes polaires, et R est un groupe de pontage bivalent ayant 1 à 4 atomes de carbone dans le pont.

2. Procédé selon la revendication 1 caractérisé en ce que la composition de catalyseur comprend un sel de palladium d'acide carboxylique en tant que composant a).

3. Procédé selon les revendications 1 ou 2, caractérisé en ce que les groupes R₁ et R₂ de l'acide sulfonique sont des groupes aromatiques identiques.

4. Procédé selon la revendication 3, caractérisé en ce que la composition de catalyseur comprend un acide arylsulfonique ayant un groupe R₁R₂P- en position ortho relativement au groupe acide sulfonique, en tant que composant b).

5. Procédé catalytique selon la revendication 4, caractérisé en ce que la composition de catalyseur comprend l'acide ortho-(diphénylphosphino)benzènessulfonique en tant que composant b).

6. Procédé selon les revendications 1 ou 2, caractérisé en ce que la composition de catalyseur comprend un acide alkyl(en C₁-C₃) sulfonique dans lequel un des atomes de carbone porte un groupe R₁R₂P- en tant que composant b).

7. Procédé selon la revendication 6, caractérisé en ce que la composition de catalyseur comprend l'acide 2-(diphénylphosphino) éthanesulfonique ou l'acide 3-(diphénylphosphino)propanesulfonique en tant que composant b).

8. Procédé selon l'une quelconque des revendications 1 à 7, caractérisé en ce que le composant b) est présent en une quantité de 1 à 25 équivalents par atome-gramme de palladium.

9. Procédé selon l'une quelconque des revendications 1 à 8, caractérisé en ce que de plus la composition de catalyseur comprend un sel de métal de transition non noble d'un acide ayant un pKa inférieur à 4.

10. Procédé selon l'une quelconque ou plusieurs des revendications 1 à 9, caractérisé en ce que de plus la composition de catalyseur comprend une quinone, telle que la 1,4-benzoquinone, en une quantité de 10 à 5 000 moles par atome-gramme de palladium.

11. Compositions de catalyseur comprenant
a) un composé du palladium et
b) un acide sulfonique de formule R₁ R₂ P-R-SO₃ H, dans laquelle R₁ et R₂ représentent des groupes hydrocarbonés semblables ou différents qui peuvent ou non être substitués avec des groupes polaires, et R est un groupe de pontage bivalent ayant 1 à 4 atomes de carbone dans le pont,
caractérisées en ce que de plus elles comprennent un sel de métal de transition non noble d'un acide ayant un pKa inférieur à 4.

12. Compositions de catalyseur comprenant
a) un composé du palladium et
b) un acide sulfonique de formule R₁ R₂ P-R-SO₃H, dans laquelle R₁ et R₂ représentent des groupes hydrocarbonés semblables ou différents qui peuvent ou non être substitués avec des groupes polaires, et R est un groupe de pontage bivalent ayant 1 à 4 atomes de carbone dans le pont,
caractérisées en ce que de plus elles contiennent une quinone, telle que la 1,4-benzoquinone, en une quantité de 10 à 5 000 moles par atome-gramme de palladium.
